# FASCICULE DE BREVET EUROPEEN

(11) **EP 2 691 349 B1**
(45) Date de publication et mention de la délivrance du brevet: **07.06.2017**
(21) Numéro de dépôt: 12713371.8
(22) Date de dépôt: 27.03.2012
(51) Int. Cl.: C04B 35/109, C04B 35/478, C04B 35/484, C04B 35/49, C04B 35/657, C04B 35/626

(54) **GRAINS FONDUS ATZ**
VERSCHMOLZENE ATZ-KÖRNER
ATZ FUSED GRAINS

(30) Priorité: 31.03.2011 FR 1152725
(43) Date de publication de la demande: 05.02.2014
(73) Titulaire: Saint-Gobain Centre de Recherches et d'Etudes Européen, 92400 Courbevoie (FR)
(72) Inventeur: RAFFY, Stéphane, F-84300 Les Vigneres (FR)
(74) Mandataire: Nony
(86) Numéro de dépôt international: PCT/IB2012/051461
(87) Numéro de publication internationale: WO 2012/131582

(56) Documents cités:
- EP-A1- 1 820 785
- WO-A2-2010/001065
- KR-A- 20030 090 081
- US-A- 4 646 950
- US-A1- 2008 203 627

## Description

### Domaine technique

L'invention se rapporte à des grains fondus à base d'alumine, d'oxyde de titane et de zircone, et à un produit fritté comportant de tels grains, un tel produit fritté étant destiné à entrer en contact avec un métal en fusion.

### Etat de la technique

Pour être utilisable dans une telle application, un produit fritté céramique doit présenter une bonne résistance mécanique, une bonne résistance aux chocs thermiques et une bonne résistance à la corrosion au contact avec le métal en fusion. Le choix des grains utilisés pour fabriquer le produit est déterminant à cet effet.

Une plaque tiroir ("slide gate" en anglais) est notamment utilisée en coulée continue de l'acier pour ouvrir ou fermer des répartiteurs ou des orifices d'évacuation de poches de coulée en communication de fluide avec des lingotières, via une busette de coulée continue (« sliding nozzle » en anglais).

Classiquement, les plaques tiroirs sont obtenues par frittage d'un mélange de corindon et de grains fondus de zircone-mullite et éventuellement de grains fondus d'alumine-zircone.

EP 1 820 785 décrit une plaque tiroir fabriquée par frittage d'un mélange comportant des grains fondus présentant entre 10% et 50% d'alumine Al₂O₃ entre 10% et 40% de TiO₂ et plus de 50% de zircone, en pourcentages massiques. US 4 646 950 A décrit des busettes de coulée continue et divulgue des particules fondues à base d'alumine, d'oxyde de titane et de zircone «ATZ» comprenant 42-79,3%m alumine, 20-40%m zircone, 0,5-16%m d'oxyde de titane, et jusqu'à 2%m de SiO₂, Fe₂O₃ et Na₂O (%m désignant des pourcentages massiques).

US 2008/203627 A1 décrit des articles céramiques présentant de bonnes propriétés réfractaires et de résistance aux chocs thermiques, obtenus par frittage d'une composition telle que : 33,64 %m Al₂O₃; 42,19%m TiO₂; 24,17 %m ZrO₂; 3%m Y₂O₃.
KR 2003 0090081 A concerne les métaux en fusion et décrit des produits céramiques résistants à la corrosion et aux chocs thermiques, obtenus par frittage de titanate d'aluminium et titanate de zirconium en présence de MgO. Un exemple de composition est : 50 mol% Al₂TiO₅ et 50 mol% ZrTiO₄, auxquels on ajoute 5 mol% MgO, c'est-à-dire : 25,25 %m Al₂O₃; 39,55%m TiO₂ ; 30,44 %m ZrO₂ ; 4,76 %m Y₂O₃.

Il existe un besoin permanent pour de nouveaux grains aptes à être utilisés dans des produits frittés destinés à être en contact avec un métal en fusion, en particulier dans des plaques tiroirs et présentant des propriétés mécaniques améliorées ainsi qu'une bonne résistance aux chocs thermiques. Un but de l'invention est de satisfaire ce besoin.

### Résumé de l'invention

Selon l'invention, on atteint ce but au moyen d'un grain fondu comportant, pour un total de 100% :
- plus de 10%, de préférence plus de 15%, et moins de 50%, de préférence moins de 35% d'alumine Al₂O₃;
- plus de 10%, de préférence plus de 15%, et moins de 50%, voire moins de 45%, voire moins de 40%, voire moins de 35% d'oxyde de titane TiO₂ ;
- plus de 21%, de préférence plus de 25%, et moins de 50% et, de préférence, moins de 45% de zircone (ZrO₂ + traces de HfO₂);
- plus de 1%, de préférence plus de 1,5%, de préférence plus de 2%, de préférence plus de 2,5% et moins de 10%, moins de 9%, de préférence moins de 8%, d'un composé choisi dans le groupe constitué par MgO, CaO, Fe₂O₃, Cr₂O₃, MnO₂, La₂O₃, Y₂O₃, Ga₂O₃ et leurs mélanges ;
- moins de 20% de silice SiO₂ ;
- moins de 10%, de préférence moins de 5%, moins de 4%, voire moins de 3% d'un composé choisi dans le groupe constitué par les oxydes des éléments Sr, Na, K, et Ba, et leurs mélanges ;
- moins de 2% d'autres espèces oxydes ;
les pourcentages étant des pourcentages en masse sur la base des oxydes.

Un grain fondu selon l'invention peut encore comporter une ou plusieurs des caractéristiques optionnelles suivantes :
- La teneur massique en MgO est supérieure à 1%, de préférence supérieure à 1,5%, et/ou inférieure à 9% et, de préférence, inférieure à 8%.
- La teneur massique en CaO est supérieure à 0,5%, voire supérieure à 0,7%, supérieure à 1 %, supérieure à 1,5%, et/ou inférieure à 9%, voire inférieure à 8%, voire inférieure à 5%, voire inférieure à 3%.
- La teneur massique en Y₂O₃ est supérieure à 0,5%, voire supérieure à 0,7%, supérieure à 1 %, supérieure à 1,5%, et/ou inférieure à 8%, voire inférieure à 5%, voire inférieure à 3%.
- MgO, CaO et Y₂O₃ sont présents simultanément.
- La teneur en (Cr₂O₃ + MnO₂ + La₂O₃ + Ga₂O₃) est inférieure à 1%, voire inférieure à 0,5%.
- Les composés faisant partie du groupe des oxydes, nitrures, oxynitrures, carbures, oxycarbures, carbonitrures et espèces métalliques de fer, vanadium et chrome sont des impuretés.
- La teneur de chacun desdits oxydes alcalins et/ou alcalino-terreux est inférieure à 4%, voire inférieure à 3%, voire inférieure à 1%.
- Les composés faisant partie du groupe des oxydes, nitrures, oxynitrures, carbures, oxycarbures, carbonitrures et espèces métalliques de sodium et autres alcalins sont des impuretés.
- La teneur en silice est supérieure à 0,1 %, supérieure à 1%, supérieure à 2%, et/ou inférieure à 18%, inférieure à 15%, inférieure à 12%, inférieure à 10%.

Une poudre comportant, voire constituée, de grains selon l'invention et l'utilisation d'une telle poudre pour la fabrication d'une plaque tiroir ou d'un revêtement d'un four, par exemple d'un four à induction, en particulier pour la fusion de métaux, est décrite.

La poudre peut être en particulier du type pisé sec ou « DVC », en anglais « dry vibratable mix » ou « dry refractory ».

Une telle poudre de grains peut présenter un diamètre médian (d₅₀) supérieur à 2 µm, supérieur à 5 µm, ou supérieur à 10 µm ou supérieur à 50 µm et/ou inférieur à 8 mm, inférieur à 7 mm, inférieur à 5 mm, inférieur à 3 mm, inférieur à 2 mm, inférieur à 1 mm, ou inférieur à 500 µm

L'invention concerne également un produit fritté obtenu par frittage d'une poudre selon l'invention, en particulier sous la forme d'un revêtement ou d'une plaque tiroir.

De préférence, un produit fritté selon l'invention présente une porosité ouverte inférieure à 30%, inférieure à 20%, voire inférieure à 15%. Un procédé de fabrication d'une poudre de grains fondus selon l'invention, comprenant les étapes successives suivantes, est décrit :
a) mélange de matières premières de manière à former une charge de départ,
b) fusion de ladite charge de départ jusqu'à obtention d'une matière en fusion,
c) solidification de ladite matière en fusion,
d) optionnellement, et en particulier si l'étape c) ne conduit pas à l'obtention de grains, broyage de ladite masse solide de manière à obtenir une poudre de grains.

Les matières premières sont choisies à l'étape a) de manière que la masse solide obtenue en fin d'étape c) présente une composition conforme à celle d'un grain selon l'invention.

L'utilisation d'un produit fritté selon l'invention, dans une application dans laquelle il est soumis à un choc thermique et/ou dans laquelle il est en contact avec un métal en fusion, en particulier sous la forme d'un revêtement ou d'une plaque tiroir, est décrite également. En particulier, elle concerne une installation choisie parmi un four et une plaque tiroir comportant un produit fritté obtenu par frittage d'une poudre de grains selon l'invention, en particulier dans une région où ledit produit fritté est destiné à être en contact avec un métal en fusion.

### Définitions

- Dans les présentes description et revendications, sauf mention contraire, tous les pourcentages sont des pourcentages massiques. En particulier, toutes les compositions d'un grain sont données en pourcentages massiques sur la base des oxydes du grain.
- Une « matière en fusion » est une masse liquide qui, pour conserver sa forme, doit être contenue dans un récipient. Elle peut contenir quelques particules solides, mais en quantité insuffisante pour qu'elles puissent structurer ladite masse.
- « Autres espèces oxydes » désigne tous les composés oxydes qui ne sont pas mentionnés par ailleurs, c'est-à-dire autres que Al₂O₃, TiO₂, ZrO₂, HfO₂, MgO, CaO, Fe₂O₃, Cr₂O₃, MnO₂, La₂O₃, Y₂O₃, Ga₂O₃, SiO₂ et les oxydes alcalins et/ou alcalino-terreux.
- Par « impuretés», on entend les constituants inévitables, introduits involontairement avec les matières premières ou résultant de réactions avec ces constituants. Les impuretés ne sont pas des constituants nécessaires, mais seulement tolérés.
- On appelle « zircone » l'oxyde de zirconium ZrO₂ et les traces d'oxyde d'hafnium HfO₂, chimiquement indissociable du ZrO₂ et toujours naturellement présent dans les sources de ZrO₂. Ces traces de HfO₂ représentent moins de 2% de la masse de la zircone. L'oxyde d'hafnium n'est pas considéré comme une impureté, ni comme une « autre espèce oxyde »..
- On appelle « diamètre médian » d'une poudre de grains, généralement noté d₅₀, le diamètre divisant les grains de cette poudre en première et deuxième populations égales en volume, ces première et deuxième populations ne comportant que des grains présentant un diamètre supérieur, ou inférieur respectivement, au diamètre médian. Par « diamètre d'un grain », on entend le diamètre de la sphère de même volume. Le diamètre des grains d'une poudre est évalué classiquement par une caractérisation de distribution granulométrique réalisée avec un granulomètre laser. Le granulomètre laser peut être, par exemple, un Partica LA-950 de la société HORIBA.
- On appelle "grain" une particule présentant un diamètre inférieur à 10 mm.

### Description détaillée

La description qui suit est fournie à des fins illustratives et ne limite pas l'invention.

Des grains fondus selon l'invention peuvent être fabriqués suivant les étapes a) à d) mentionnées ci-dessus.

**A l'étape a),** des matières premières sont classiquement dosées de manière à obtenir la composition souhaitée, puis mélangées pour former la charge de départ.

Le titane peut être introduit sous une forme quelconque, en particulier sous forme d'oxyde TiO₂ ou sous forme métallique ou sous forme d'un alliage zircone-oxyde de titane, ou de titanate d'alumine.

Dans un mode de réalisation les oxydes alcalins et alcalino-terreux sont des impuretés.

On considère qu'une teneur en « autres espèces oxydes » inférieure à 2% ne supprime pas l'effet technique procuré par l'invention. Les "autres espèces oxydes" peuvent être également des impuretés.

De préférence, la teneur en impuretés est inférieure à 3%, inférieure à 2%, inférieure à 1%, voire inférieure à 0,5%.

**A l'étape b),** on utilise de préférence un four à arc électrique, mais tous les fours connus sont envisageables, comme un four à induction ou un four à plasma, pourvu qu'ils permettent de faire fondre complètement la charge de départ. La cuisson est de préférence effectuée dans des conditions neutres, par exemple sous argon, ou oxydantes, de préférence à pression atmosphérique.

**A l'étape c),** le refroidissement peut être rapide, c'est-à-dire de manière que la matière en fusion soit entièrement solidifiée en moins de 3 minutes. Par exemple, il peut résulter d'un coulage dans des moules CS tels que décrits dans US 3,993,119 ou d'une trempe. Il peut aussi être plus lent (lingot refroidi à l'air libre ou bloc de recuisson).

Si l'étape c) ne permet pas d'obtenir une poudre de grains, ou si ces grains ne présentent pas une granulométrie adaptée à l'application visée, un broyage (**étape d)))** peut être mis en oeuvre, selon des techniques conventionnelles.

La fabrication d'un produit fritté selon l'invention, à partir d'une poudre de grains selon l'invention, peut être réalisée par tout procédé connu.

### Exemples

Les exemples suivants sont fournis à titre illustratif et ne limitent pas la portée de l'invention.

Dans tous les exemples, les échantillons ont été préparés à partir des matières premières suivantes :
- Anatase comportant plus de 98% de TiO₂, commercialisée par la société Altichem ou rutile comportant plus de 95% de TiO₂ et présentant un diamètre médian d₅₀ d'environ 120 µm, commercialisée par la société Europe Minerals,
- Alumine AR75 comportant plus de 98% d'Al₂O₃, commercialisée par la société Alcan et présentant un diamètre médian d₅₀ d'environ 85 µm,
- Silice SiO₂ avec un taux de pureté supérieur à 99,5% et présentant un diamètre médian d₅₀ de 208 µm, commercialisée par la société Sifraco,
- Magnésie MgO avec un taux de pureté supérieur à 98%, plus de 80% des particules présentant un diamètre compris entre 0,25 et 1 mm, commercialisée par la société Nedmag,
- Zircone avec un taux de pureté supérieur à 98,5% présentant un diamètre médian d₅₀ de 3,5 µm, commercialisée sous la référence CC10 par la société Saint-Gobain ZirPro.

Les matières premières ont été dosées et mélangées pour former une charge de départ de composition appropriée.

Pour la fabrication de l'échantillon de l'exemple 3, la charge de départ a été pressée pour constituer une préforme sous la forme d'un disque de diamètre 13 mm et de hauteur 13 mm.

Pour la fabrication des échantillons des exemples 1, 2 et 4, la charge de départ a été fondue dans un four à arc électrique, sous air, avec une marche électrique oxydante, puis refroidie. Les masses solides obtenues ont ensuite été broyées et tamisées pour obtenir des poudres présentant un diamètre médian (d₅₀) compris entre 10 et 15 µm.

Les poudres de grains fondus ont été pressées pour constituer des préformes sous la forme de disques, similaires à celui de l'exemple 3.

Tous les disques ont ensuite été frittés à une température de 1450°C pendant 4 heures. On a ainsi obtenus les échantillons des exemples 1 à 4.

Les échantillons préparés ont ensuite été analysés. Les résultats sont regroupés dans le tableau 1.

La composition chimique, indiquée en pourcentages massiques sur la base des oxydes, a été déterminée par fluorescence des rayons X.

La porosité (P) a été déterminée de façon classique par mesure de la densité géométrique et de la densité absolue déterminée, sur l'échantillon broyé, par pycnométrie hélium.

Le coefficient de dilatation « a » a été mesuré entre 50°C et 600°C.

La résistance à la compression « b » a été déterminée à la température ambiante de manière classique, sur des échantillons 1 à 4.

**Tableau 1**

| | Composition chimique (en pourcentages massiques) | | | | | | | Résultats | | |
|---|---|---|---|---|---|---|---|---|---|---|
| | Grains | Al₂O₃ | TiO₂ | ZrO₂ | MgO | SiO₂ | Fe₂O₃ | P (%) | a (°C⁻¹) | b (MPa) |
| 1* | Fondus | 42,0 | 44,0 | 4,55 | 4,25 | 4,61 | 0,54 | 16 | 0,7.10⁻⁶ | 180 |
| 2 | Fondus | 28,1 | 32,6 | 31,2 | 3,07 | 4,20 | 0,38 | 10 | 4,7.10⁻⁶ | 345 |
| 3* | | 28,1 | 32,6 | 31,2 | 3,07 | 4,20 | 0,38 | 28 | ND | 23 |
| 4* | Fondus | 17,9 | 22,2 | 56,7 | 2,31 | 0,57 | 0,30 | 21 | 7,1.10⁻⁶ | 204 |

| | | | | | | | | | | |
|---|---|---|---|---|---|---|---|---|---|---|
| * : exemple comparatif | | | | | | | | | | |

Le tableau 1 indique que les grains selon l'invention (exemple 2) conduisent à un produit fritté qui présente une résistance mécanique particulièrement élevée.

La comparaison de l'exemple 2 et de l'exemple 3 montre l'intérêt de grains obtenus par fusion, dits grains "fondus". La fusion de la charge de départ conduit en effet à une meilleure résistance mécanique et à une moindre porosité, permettant de limiter la corrosion et/ou l'infiltration.

Le tableau 1 montre que les grains selon l'invention présentent un coefficient de dilatation « a » plus faible que celui de l'exemple 4* ou que celui de grains fondus de mullite-zircone (de l'ordre de 7 x 10⁻⁶°C⁻¹) ou que celui de grains fondus d'alumine-zircone (de l'ordre de 10 × 10⁻⁶°C⁻¹). Ceci permet d'obtenir des produits présentant une meilleure résistance aux chocs thermiques.

Les phases cristallines présentes dans l'échantillon de l'exemple 2 ont été caractérisées par diffraction des rayons X. On observe une phase principale constituée par une phase oxyde en solution solide, du type pseudo-brookite, comprenant du titane, de l'aluminium, du magnésium et du zirconium dans des proportions telles que la phase du type pseudo-brookite répond sensiblement à la formulation (Al₂TiO₅)ₓ(MgTi₂O₅)_{y}(MgTiZrO₅)_{z}, avec 0,1 ≤ x < 1 et 0 < y ≤ 0,9 et z = 1-x-y. On observe également une phase silicatée et une autre phase constituée essentiellement d'oxyde de titane et de zircone.

Par ailleurs, la stabilité des phases cristallines présentes a été vérifiée par un test consistant à comparer par diffraction des rayons X les phases cristallines présentes initialement dans l'échantillon de l'exemple 2 à celles présentes dans ce même échantillon après un traitement thermique de 100 heures à 800°C.

Comme cela apparaît clairement à présent, l'invention fournit un grain apte à être efficacement utilisé dans un produit fritté destiné à être en contact avec un métal en fusion.

Bien entendu, l'invention n'est pas limitée aux modes de réalisation des exemples, fournis à des fins illustratives.

## Revendications

1. Grain fondu présentant la composition chimique suivante, pour un total de 100% :
- plus de 10% et moins de 50% d'alumine Al₂O₃;
- plus de 10% et moins de 50% d'oxyde de titane TiO₂;
- plus de 21% et moins de 50% de zircone (ZrO₂ + traces de HfO₂);
- plus de 1% et moins de 10% d'un composé choisi dans le groupe constitué par MgO, CaO, Fe₂O₃, Cr₂O₃, MnO₂, La₂O₃, Y₂O₃, Ga₂O₃ et leurs mélanges;
- moins de 20% de silice SiO₂ ;
- moins de 10% d'un composé choisi dans le groupe constitué par les oxydes des éléments Sr, Na, K et Ba et leurs mélanges;
- moins de 2% d'autres espèces oxydes;
les pourcentages étant des pourcentages en masse sur la base des oxydes.

2. Grain fondu selon la revendication précédente, comportant :
- plus de 15% d'alumine Al₂O₃ ; et/ou
- plus de 15% d'oxyde de titane TiO₂; et/ou
- plus de 25% de zircone
- plus de 1,5% d'un composé choisi dans le groupe constitué par MgO, CaO, Fe₂O₃, Cr₂O₃, MnO₂, La₂O₃, Y₂O₃, Ga₂O₃ et leurs mélanges; et/ou
- moins de 5% d'un composé choisi dans le groupe constitué par les oxydes des éléments Sr, Na, K, et Ba, et leurs mélanges;
en pourcentage massique sur la base des oxydes.

3. Grain fondu selon l'une quelconque des revendications précédentes, comportant :
- moins de 35% d'alumine Al₂O₃; et/ou
- moins de 45% d'oxyde de titane TiO₂; et/ou
- moins de 45% de zircone; et/ou
- moins de 9%, d'un composé choisi dans le groupe constitué par MgO, CaO, Fe₂O₃, Cr₂O₃, MnO₂, La₂O₃, Y₂O₃, Ga₂O₃ et leurs mélanges ; et/ou
- moins de 4% d'un composé choisi dans le groupe constitué par les oxydes des éléments Sr, Na, K, et Ba, et leurs mélanges ;
en pourcentage massique sur la base des oxydes.

4. Grain fondu selon la revendication précédente, comportant :
- moins de 40% d'oxyde de titane TiO₂ ; et/ou
- moins de 3% d'un constituant choisi dans le groupe constitué par les composés oxydes des éléments Sr, Na, K, et Ba, et leurs mélanges ;
en pourcentage massique sur la base des oxydes

5. Grain fondu selon l'une quelconque des revendications précédentes, dans lequel la teneur massique en MgO est supérieure à 1,5% et inférieure à 8%, en pourcentage massique sur la base des oxydes.

6. Grain fondu selon l'une quelconque des revendications précédentes, dans lequel la teneur massique en CaO est supérieure à 1,5% et inférieure à 8%, en pourcentage massique sur la base des oxydes.

7. Grain fondu selon l'une quelconque des revendications précédentes, dans lequel la teneur massique en Y₂O₃ est supérieure à 1,5% et inférieure à 8%, en pourcentage massique sur la base des oxydes.

8. Grain fondu selon l'une quelconque des revendications précédentes, dans lequel la teneur en (Cr₂O₃ + MnO₂ + La₂O₃ + Ga₂O₃) est inférieure à 1%, en pourcentage massique sur la base des oxydes.

9. Grain fondu selon l'une quelconque des revendications précédentes, dans lequel la teneur de chacun des oxydes des éléments Sr, Na, K et Ba est inférieure à 4%, en pourcentage massique sur la base des oxydes.

10. Grain fondu selon la revendication précédente, dans lequel la teneur des oxydes des éléments Sr, Na, K et Ba est inférieure à 1%, en pourcentage massique sur la base des oxydes.

11. Grain fondu selon l'une quelconque des revendications précédentes, dans lequel la teneur en silice est supérieure à 0,1% en pourcentage massique sur la base des oxydes.

12. Grain fondu selon la revendication précédente, dans lequel la teneur en silice est supérieure à 1 %, en pourcentage massique sur la base des oxydes.

13. Grain fondu selon l'une quelconque des revendications précédentes, dans lequel la teneur en silice est inférieure à 15%, en pourcentage massique sur la base des oxydes.

14. Grain fondu selon la revendication précédente, dans lequel la teneur en silice est supérieure à 2% et inférieure à 10%, en pourcentage massique sur la base des oxydes.

15. Produit fritté obtenu par frittage d'une poudre comportant des grains selon l'une quelconque des revendications précédentes.

## Patentansprüche

1. Geschmolzenes Korn mit folgender chemischer Zusammensetzung für insgesamt 100%:
- mehr als 10% und weniger als 50% Aluminiumoxyd Al₂O₃;
- mehr als 10% und weniger als 50% Titanoxyd TiO₂;
- mehr als 21% und weniger als 50% Zirkonoxyd (ZrO₂ + Spuren von HfO₂);
- mehr als 1% und weniger als 10% einer Zusammensetzung, die ausgewählt ist aus der Gruppe, die aus MgO, CaO, Fe₂O₃, Cr₂O₃, MnO₂, La₂O₃, Y₂O₃, Ga₂O₃ und ihren Mischungen besteht;
- weniger als 20% Siliciumoxyd SiO₂;
- weniger als 10% einer Zusammensetzung, die ausgewählt ist aus der Gruppe, die aus den Oxyden der Elemente Sr, Na, K und Ba und ihren Mischungen besteht;
- weniger als 2% von anderen Oxydarten:
wobei die Prozentangaben Massenprozente auf der Basis von Oxyden sind.

2. Geschmolzenes Korn nach dem vorhergehenden Anspruch, aufweisend:
- mehr als 15% Aluminiumoxyd Al₂O₃; und/oder
- mehr als 15% Titanoxyd TiO₂; und/oder
- mehr als 25% Zirkonoxyd;
- mehr als 1,5% einer Zusammensetzung, welche aus der Gruppe ausgewählt ist, die gebildet ist durch MgO, CaO, Fe₂O₃, Cr₂O₃, MnO₂, La₂O₃, Y₂O₃, Ga₂O₃ und ihre Mischungen; und/oder
- weniger als 5% einer Zusammensetzung, die aus der Gruppe ausgewählt ist, die durch die Oxyde der Elemente Sr, Na, k und Ba gebildet ist sowie deren Mischungen;
in Massenprozent auf der Basis von Oxyden.

3. Geschmolzenes Korn nach einem der vorhergehenden Ansprüche, aufweisend:
- weniger als 35% Aluminiumoxyd Al₂O₃; und/oder
- weniger als 45% Titanoxyd TiO₂; und/oder
- weniger als 45% Zirkonoxyd; und/oder
- weniger als 9% einer Zusammensetzung, die aus der Gruppe gewählt wird, die gebildet ist durch MgO, CaO, Fe₂O₃, Cr₂O₃, MnO₂, La2O₃, Y₂O₃, Ga₂O₃ und ihren Mischungen; und/oder
- weniger als 4% einer Zusammensetzung, die aus der Gruppe gewählt ist, die durch die Oxyde der Elemente Sr, Na, K, und Ba und deren Mischungen gebildet ist;
- in Massenprozent auf der Basis von Oxyden.

4. Geschmolzenes Korn nach dem vorhergehenden Anspruch, aufweisend:
- weniger als 40% Titanoxyd TiO₂; und/oder
- weniger als 3% einer Zusammensetzung, die aus der Gruppe gewählt wird, die durch die Oxydverbindungen der Elemente Sr, Na, K und Ba gebildet ist sowie aus deren Mischungen;
- in Massenprozent auf der Basis von Oxyden.

5. Geschmolzenes Korn nach einem der vorhergehenden Ansprüche, bei dem der Massengehalt an MgO größer als 1,5% und kleiner als 8% in Massenprozent auf der Basis von Oxyden ist.

6. Geschmolzenes Korn nach einem der vorhergehenden Ansprüche, bei dem der Massengehalt an CaO größer als 1,5% und kleiner als 8% in Massenprozent auf der Basis von Oxyden ist.

7. Geschmolzenes Korn nach einem der vorhergehenden Ansprüche, bei dem Massengehalt an Y₂O₃ größer als 1,5% und kleiner als 8% in Massenprozent auf der Basis von Oxyden ist.

8. Geschmolzenes Korn nach einem der vorhergehenden Ansprüche, bei dem der Gehalt an (Cr₂O₃ + MnO₂ + La2O₃ + Ga₂O₃) kleiner als 1% in Massenprozent auf der Basis von Oxyden ist.

9. Geschmolzenes Korn nach einem der vorhergehenden Ansprüche, bei dem der Gehalt jedes der Oxyde der Elemente Sr, Na, K und Ba kleiner als 4% in Massenprozent auf der Basis von Oxyden ist.

10. Geschmolzenes Korn nach dem vorhergehenden Anspruch, bei dem der Gehalt an Oxyden der Elemente Sr, Na, K und Ba kleiner als 1% in Massenprozent auf der Basis von Oxyden ist.

11. Geschmolzenes Korn nach einem der vorhergehenden Ansprüche, bei dem der Gehalt an Siliziumoxyd größer als 0,1% in Massenprozent auf der Basis von Oxyden ist.

12. Geschmolzenes Korn nach dem vorhergehenden Anspruch, bei dem der Gehalt an Siliziumoxyd größer als 1% in Massenprozent auf der Basis von Oxyden ist.

13. Geschmolzenes Korn nach einem der vorhergehenden Ansprüche, bei dem der Gehalt an Siliziumoxyd kleiner als 15% in Massenprozent auf der Basis von Oxyden ist.

14. Geschmolzenes Korn nach dem vorhergehenden Anspruch, bei dem der Gehalt an Siliziumoxyd größer als 2% und kleiner als 10% in Massenprozent auf der Basis von Oxyden ist.

15. Gesintertes Produkt durch Sinterung eines Pulvers, welches Körner nach einem der vorhergehenden Ansprüche aufweist.

## Claims

1. A fused grain having the following chemical composition, for a total of 100%:
- more than 10% and less than 50% of alumina Al₂O₃;
- more than 10% and less than 50% of titanium oxide TiO₂;
- more than 21% and less than 50% of zirconia (ZrO₂ + traces of ZrO₂);
- more than 1% and less than 10% of a compound selected from the group consisting of MgO, CaO, Fe₂O₃, Cr₂O₃, MnO₂, La₂O₃, Y₂O₃, Ga₂O₃ and mixtures thereof;
- less than 20% of silica SiO₂;
- less than 10% of a compound selected from the group consisting of alkali metal oxides, alkaline-earth metal oxides and mixtures thereof;
- less than 2% of other oxide species;
the percentages being percentages by weight on the basis of the oxides.

2. The fused grain as claimed in the preceding claim, comprising:
- more than 15% of alumina Al₂O₃; and/or
- more than 15% of titanium oxide TiO₂; and/or
- more than 25% of zirconia;
- more than 1.5% of a compound selected from the group consisting of MgO, CaO, Fe₂O₃, Cr₂O₃, MnO₂, La₂O₃, Y₂O₃, Ga₂O₃ and mixtures thereof; and/or
- less than 5% of a compound selected from the group consisting of oxides of elements Sr, Na, K and Ba, and mixtures thereof;
as weight percentages on the basis of the oxides.

3. The fused grain as claimed in either of the preceding claims, comprising:
- less than 35% of alumina Al₂O₃; and/or
- less than 45% of titanium oxide TiO₂; and/or
- less than 45% of zirconia; and/or
- less than 9% of a compound selected from the group consisting of MgO, CaO, Fe₂O₃, Cr₂O₃, MnO₂, La₂O₃, Y₂O₃, Ga₂O₃ and mixtures thereof; and/or
- less than 4% of a compound selected from the group consisting of oxides of elements Sr, Na, K and Ba, and mixtures thereof;
as weight percentages on the basis of the oxides.

4. The fused grain as claimed in the preceding claim, comprising:
- less than 40% of titanium oxide TiO₂; and/or
- less than 3% of a constituent selected from the group consisting of the compounds oxides of elements Sr, Na, K and Ba, and mixtures thereof;
as weight percentages on the basis of the oxides.

5. The fused grain as claimed in any one of the preceding claims, wherein the weight content of MgO is greater than 1.5% and less than 8%, as a weight percentage on the basis of the oxides.

6. The fused grain as claimed in any one of the preceding claims, wherein the weight content of CaO is greater than 1.5% and less than 8%, as a weight percentage on the basis of the oxides.

7. The fused grain as claimed in any one of the preceding claims, wherein the weight content of Y₂O₃ is greater than 1.5% and less than 8%, as a weight percentage on the basis of the oxides.

8. The fused grain as claimed in any one of the preceding claims, wherein the content of (Cr₂O₃ + MnO₂ + Lea₂O₃ + Ga₂O₃) is less than 1%, as a weight percentage on the basis of the oxides.

9. The fused grain as claimed in any one of the preceding claims, wherein the content of each of said alkali metal oxides and/or alkaline-earth metal oxides is less than 4%, as a weight percentage on the basis of the oxides.

10. The fused grain as claimed in the preceding claim, wherein the content of each of said alkali metal oxides and/or alkaline-earth metal oxides is less than 1%, as a weight percentage on the basis of the oxides.

11. The fused grain as claimed in any one of the preceding claims, wherein the content of silica is greater than 0.1%, as a weight percentage on the basis of the oxides.

12. The fused grain as claimed in the preceding claim, wherein the content of silica is greater than 1%, as a weight percentage on the basis of the oxides.

13. The fused grain as claimed in any one of the preceding claims, wherein the content of silica is less than 15%, as a weight percentage on the basis of the oxides.

14. The fused grain as claimed in the preceding claim, wherein the content of silica is greater than 2% and less than 10%, as a weight percentage on the basis of the oxides.

15. A sintered product obtained by sintering a powder comprising grains as claimed in any one of the preceding claims.
